# FASCICULE DE BREVET EUROPEEN

(11) **EP 0 520 876 B1**
(45) Date de publication et mention de la délivrance du brevet: **14.08.1996**
(21) Numéro de dépôt: 92401756.9
(22) Date de dépôt: 23.06.1992
(51) Int. Cl.: H04L 12/40, H04L 12/28

(54) **Procédé et système de communications d'information et commandes appliqués à un réseau domotique**
Verfahren und System zum Übertragen von Nachrichten und Steuerdaten in einem Hausnetz
Method and system of communication of information and control data applied to a domestic network

(30) Priorité: 24.06.1991 FR 9107738
(43) Date de publication de la demande: 30.12.1992
(73) Titulaire: SGS-THOMSON MICROELECTRONICS SA, F-94250 Gentilly (FR)
(72) Inventeur: Le Van Suu, Maurice, F-93230 Romainville (FR)
(74) Mandataire: Schmit, Christian Norbert Marie

(56) Documents cités:
- EP-A- 0 174 804
- WO-A-86/06890
- IEEE TRANSACTIONS ON CONSUMER ELECTRONICS. vol. CE-32, no. 3, Août 1986, NEW YORK US pages 558 - 565; K.IIDA ET AL.: 'Housekeeping application with bus line and telecommunications'
- MINI MICRO CONFERENCE RECORD. Mai 1984, NEW YORK US pages 1 - 10; R.MITCHELL: 'Super serial systems'

## Description

La présente invention concerne un procédé pour communiquer des informations et commandes au sein d'une habitation ou d'un immeuble. Elle vise également un système pour sa mise en oeuvre et son application à une installation de gestion automatisée d'installation domotique.

Par immeuble, on entend toute construction ou ensemble de constructions destiné à contenir des logements et/ou des locaux à usage commercial ou professionnel.

Le développement considérable des projets d'automatisation de l'habitat et plus généralement du domaine de la domotique a conduit les concepteurs de ces projets à poser le problème de la communication d'informations et de commandes entre les différentes composantes d'une installation domotique.

Plusieurs concepts de communication pour bus ont déjà été mis au point, notamment les concepts BATI BUS et EIBUS qui mettent en oeuvre une paire de fils torsadée comme canal de transmission pour véhiculer des informations d'un point à un autre.

Ce type de bus nécessite l'installation de câbles spécifiques pour assurer des interconnexions entre plusieurs équipements, ce qui induit des coûts d'infrastructure importants dès lors que de nombreuses installations sont prévues ou que doivent être déplacés un ou plusieurs équipements au sein du système domotique. Ces bus visent essentiellement des immeubles neufs intégrés et principalement dédiés à des activités tertiaires.

Il existe aussi des procédés de communication d'informations et de commandes par courants porteurs mettant en oeuvre une injection d'informations sur le réseau secteur monophasé ou triphasé d'une habitation par des techniques de modulation bien connues de modulation et largement divulguées. On peut citer l'application des courants porteurs pour des relais de télécommande d'Électricité de France mettant en oeuvre deux fréquences de modulation distinctes (175/188 Hz).

La demande de brevet WO-A-8 606 890 décrit un système de contrôle d'alimentation électrique via l'envoi de message sur le réseau d'alimentation à partir d'un contrôleur, à une vitesse de transmission unique donnée.

Plus récemment, la nécessité de mettre en place une norme de communication par courants porteurs au sein de l'habitat a conduit à définir le type de modulation, la vitesse de transmission et l'encombrement spectral d'une telle communication et à proposer un protocole associé spécifiant une structure de trame injectée sur un réseau électrique domestique sur lequel est branché un ensemble d'équipements qui constituent autant de stations de communication. On entend par trame une suite d'éléments binaires ou bits représentant un ensemble cohérent d'informations codées.

Ainsi, une structure de trame proposée actuellement inclut :
- un préambule (16 bits) pour la synchronisation des stations,
- un en-tête (16 bits) précédant toute information utile,
- une adresse (28 bits) précédant tout information de contrôle,
- l'alternance d'un code de contrôle de transmission de type CRC avec les données.

Un tel protocole, s'il permet effectivement une transmission d'informations numériques sur le secteur équipant un logement, présente cependant l'inconvénient d'être relativement complexe et trop général en considérant globalement l'ensemble de tous les équipements concernés par une communication au sein de l'habitat.
Il en résulte à terme des difficultés de mise en oeuvre et de gestion pratique des communications entre des équipements de nature sensiblement différentes au sein d'un même réseau.

En particulier, un tel protocole ne permet pas à ce stade d'envisager des vitesses de transmission différentes selon le type d'équipement, ce qui conduit nécessairement à l'utilisation d'un débit d'informations dicté par l'équivalent le plus lent et ainsi à des performances qui peuvent être médiocres eu égard au coût du système de communication.

Le but de la présente invention est de remédier à ces inconvénients en proposant un procédé pour communiquer des informations et commandes au sein d'une habitation entre plusieurs équipements électriques reliés à un circuit de distribution électrique secteur équipant cette habitation, par injection sur le circuit de distribution de courants porteurs véhiculant lesdites informations et commandes.

Suivant l'invention, le procédé comprend un protocole hiérarchisé de communication entre, d'une part, des équipements définissant des stations de communication de type Maître dédiés à l'émission d'informations et, d'autre part, des équipements définissant des stations de communication de type Maître-Esclave dédiées à la réception d'informations issues des stations de type Maître et à l'émission d'informations à destination d'ensembles d'équipements définissant des stations de type Esclave dédiées à la réception de commandes et d'ordres issus d'une ou plusieurs desdites stations de type Maître-Esclave, et ce protocole de communication définit pour chaque situation de communication entre des stations de types semblables ou distincts, des paramètres de transmission, notamment une vitesse de transmission numérique, déterminés en fonction desdites stations.

Ainsi, avec le procédé selon l'invention, les équipements électriques sont organisés de façon à ce qu'une stratégie globale de communication conduise à une optimisation des flux d'informations échangées. En effet, au lieu d'attribuer à l'ensemble des équipements un statut équivalent et de définir une vitesse de transmission numérique uniforme, des couches physiques de hiérarchies différentes sont mises en place et au sein de chaque couche, des paramètres de transmission spécifiques sont prévus. Il s'agit ainsi de tenir compte des caractéristiques propres de certaines familles d'équipements électriques, notamment en termes de vitesse de transmission numérique, et de proposer à chaque équipement la possibilité de développer une stratégie propre à sa famille de produits destinés à être commandés dans une installation domotique, la "tête de pont" de sa famille de produit pouvant être constituée par une ou plusieurs stations Maître-Esclave.

Selon une version préférée de l'invention, le protocole de communication hiérarchisé autorise des échanges d'informations entre l'une au moins desdites stations de type Maître, et des équipements extérieurs à l'habitation via un support de communication, ses échanges pouvant être effectués selon un protocole de communication externe distinct du protocole de communication hiérarchisé.

Cette caractéristique permet à une installation domotique de communiquer avec l'extérieur en mettant en oeuvre un protocole de communication externe entre plusieurs unités d'habitation et entre une habitation et un réseau quelconque de communications ; ce type de communication transite nécessairement par une station de type Maître, assurant ainsi une maîtrise des flux d'informations et une redistribution efficace des informations destinées à chaque famille d'équipement.

Selon une forme de réalisation avantageuse de l'invention, les informations sont transmises, dans le cadre du protocole hiérarchisé de communication, sous la forme d'une trame comportant un ensemble de champs constitués chacun d'une séquence codée comprenant un nombre prédéterminé de bits, l'un desdits champs étant un champ d'identification incluant les informations suivantes :
- adresse de l'habitation,
- adresse de la station visée au sein de l'habitation, et
- type de la station.

Le champ d'identification proposé par l'invention permet une grande variété de modes de sélection de stations concernées par une information donnée. En particulier par des techniques de masquage connues, il est possible de diriger une information de commande vers un groupe de stations Esclave de façon très simple.

Selon un autre aspect de l'invention, le système pour communiquer des informations et commandes au sein d'une habitation, mettant en oeuvre le procédé selon l'invention, est caractérisé en ce qu'il comprend :
- au sein d'un premier groupe d'équipements, des stations de communication de type Maître agencées pour générer et émettre sur le circuit de distribution électrique des informations et commandes,
- au sein d'un second groupe d'équipements, des stations de communication de type Maître-Esclave agencées pour recevoir et exécuter des commandes en provenance de stations de type Maître et pour générer et émettre sur le circuit de distribution électrique des commandes à destination :
- d'un troisième groupe d'équipements incluant des stations de communication de type Esclave dédiées à la réception et l'exécution de commandes issues de stations de type Maître-Esclave et à l'émission d'informations sur leur état, et en ce qu'à chaque famille d'équipements est associé un ensemble de paramètres de transmission spécifiques, notamment une vitesse de transmission.

D'autres particularités et avantages de l'invention apparaîtront encore dans la description ci-après. Aux dessins annexés donnés à titre d'exemples non limitatifs :
- la figure 1 est un schéma simplifié d'un système de communication selon l'invention,
- la figure 2 est un schéma synoptique illustrant la structure hiérarchique du procédé de communication selon l'invention,
- la figure 3 est une vue illustrant des exemples d'équipements pouvant être commandés par un système de communication selon l'invention,
- la figure 4 illustre la structure d'une trame générée avec le procédé selon l'invention,
- la figure 5 est un organigramme d'une séquence d'écoute mise en oeuvre dans le procédé selon l'invention,
- la figure 6 est un organigramme d'une séquence d'émission élémentaire mise en oeuvre dans le procédé selon l'invention.

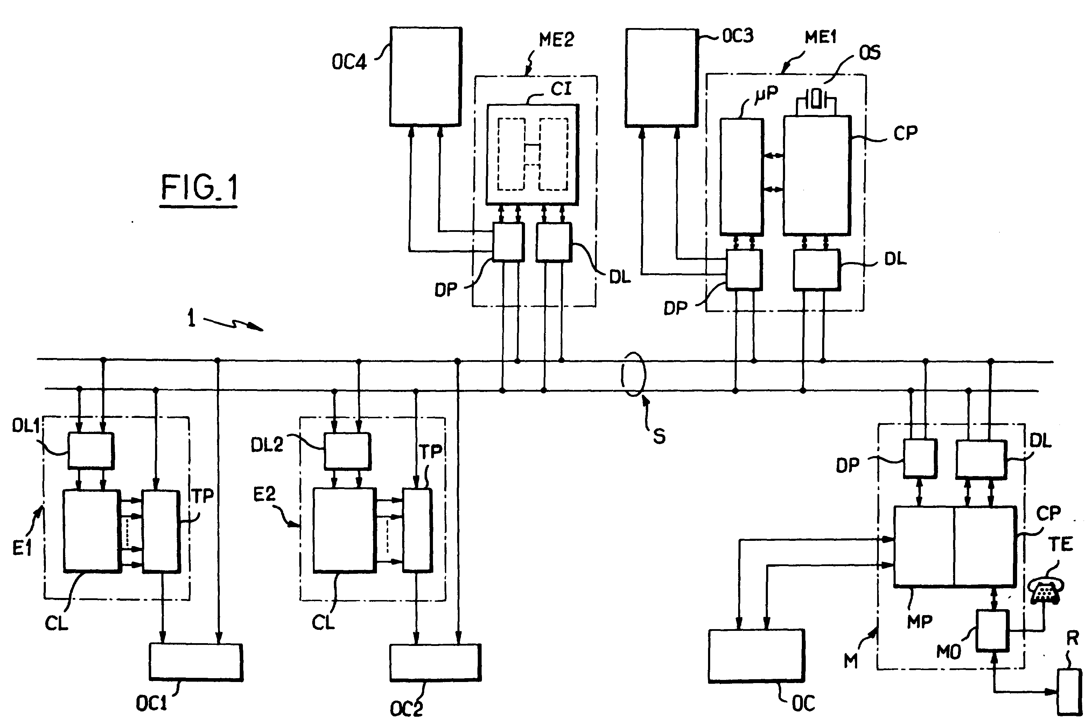

On va maintenant décrire une forme préférée de réalisation du système de communication selon l'invention en même temps que le procédé mis en oeuvre dans ce système, en référence aux figures 1 à 6.

Un système de communication domotique 1 selon l'invention est illustré par le schéma synoptique de la figure 1 en termes de modules fonctionnels.

Une station Maître M, des stations Maître-Esclave ME1 et ME2 et des stations Esclave E1, E2, sont toutes reliées au secteur 5 d'une habitation, ce secteur 5 comprenant deux lignes constituant une installation monophasée (phase-neutre) ou triphasée (phase-phase).

La station Maître M comprend un module de contrôle de protocole CP, un module microprocesseur MP, un circuit de commande de ligne DL et un circuit de commande de puissance DP, ainsi qu'un circuit modulateur-démodulateur MO permettant la communication d'informations entre la station Maître M et un réseau téléphonique R et relié à un téléphone TE.

La station Maître M est reliée à un organe de commande OC via le microprocesseur MP. L'organe de commande OC peut représenter toutes sortes de dispositifs domestiques par exemple, un système de climatisation ou encore un système de téléalarme.

Les circuits de commande de ligne DL et de commande de puissance DP sont reliés directement sur le secteur S, le premier suivant un mode bidirectionnel et le second en mode monodirectionnel permettant un prélèvement d'énergie sur le secteur S.

Le circuit de commande de ligne DL est dédié à la transmission d'informations sur le secteur S tandis que le circuit de commande de puissance DP est dédié au contrôle de l'énergie prélevée sur le secteur S et à l'alimentation de la station Maître M.

Chaque circuit de commande de ligne DL est équipé de filtres réjecteurs et résonants qui assurent une parfaite isolation entre groupes d'équipements. Les circuits résonants favorisent au sein de chaque groupe la récupération de l'information. Ils sont réalisés suivant des techniques de transmission bien connues notamment dans le domaine ferroviaire.

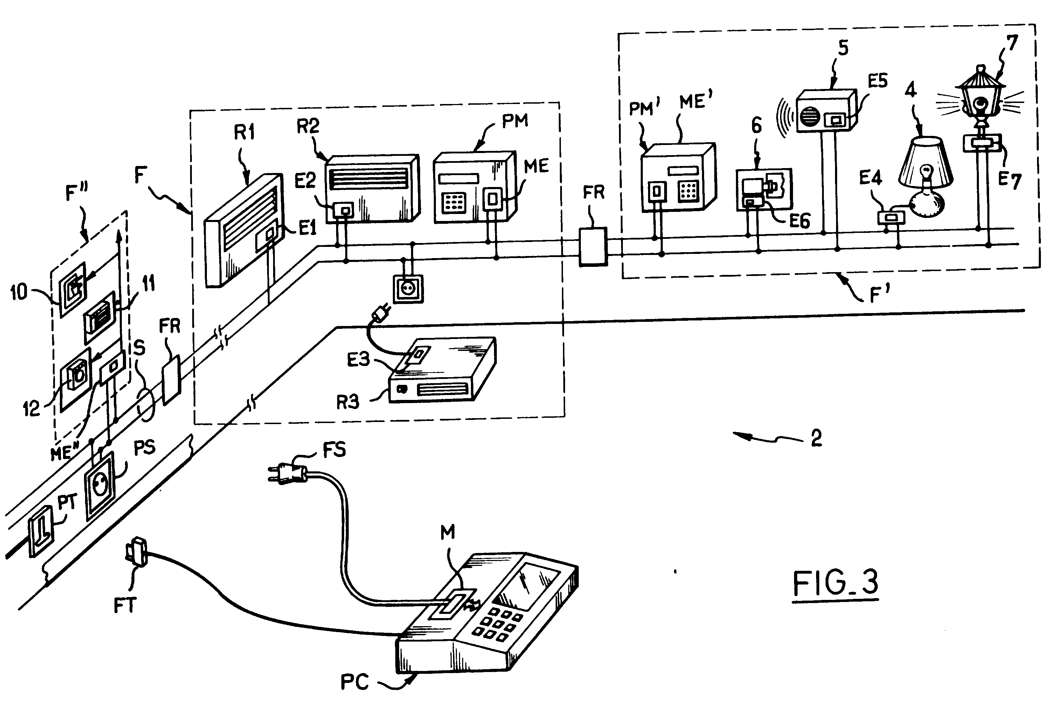

En outre, des filtres réjecteurs et résonants FR sont placés en des points appropriés du circuit de distribution électrique S afin d'assurer un isolement entre groupes d'équipements F, F′, en référence à la figure 3, et de permettre notamment une cohabitation de plusieurs modes de transmission sur le réseau, par exemple des modulations de type ASK ou FSK.

A titre d'exemple, pour un circuit de distribution monophasé, on peut placer des filtres soit entre la phase et le neutre, soit entre les deux phases.

La station Maître-Esclave ME1 comprend également un module de contrôle de protocole CP, un module microprocesseur ou microcontrôleur µP, des circuits de commande de puissance DP et de commande de ligne DL reliés chacun d'une part sur le secteur S et d'autre part, respectivement au module microprocesseur µP et au module de contrôle de protocole CP qui peut être doté d'un oscillateur OS.

Le circuit de commande de puissance assure le contrôle de l'énergie électrique délivrée à un organe de commande OC3 qui peut être par exemple un actionneur ou un équipement domestique quelconque. Il reçoit des informations émises sur le secteur S par la station Maître M.

Dans une autre forme de réalisation de station Maître-Esclave ME2, les modules de contrôle de protocole et microprocesseur sont regroupés au sein d'un circuit intégré unique CI et contrôle l'alimentation d'un organe de commande OC3 via le circuit de commande de puissance DP.

Il est à noter que les stations Maître-Esclave ME1, ME2 sont agencées pour émettre des informations de commande à destination de stations Esclave.

Chaque station Esclave E1, E2 comprend un circuit de contrôle de protocole CL relié au secteur S via un circuit de commande de ligne DL1, DL2, et un commutateur de puissance TP relié d'une part au secteur S et d'autre part à un organe de commande OC1, OC2, et commandé par des signaux issus du circuit de contrôle de protocole CL.

Les stations Esclave E1, E2, ne peuvent que recevoir des informations transitant sur le secteur S et/ou insérer une information en retour dans la trame reçue. A titre d'exemple, une station Esclave commandant une gâche électrique de porte pourra informer la station Maître-Esclave dont elle dépend, de l'état de cette gâche (fermé ou ouvert) . Cette information émise par la station Esclave peut constituer une information de reconnaissance de son bon état de fonctionnement ou d'existence ou encore d'exécution d'ordre.

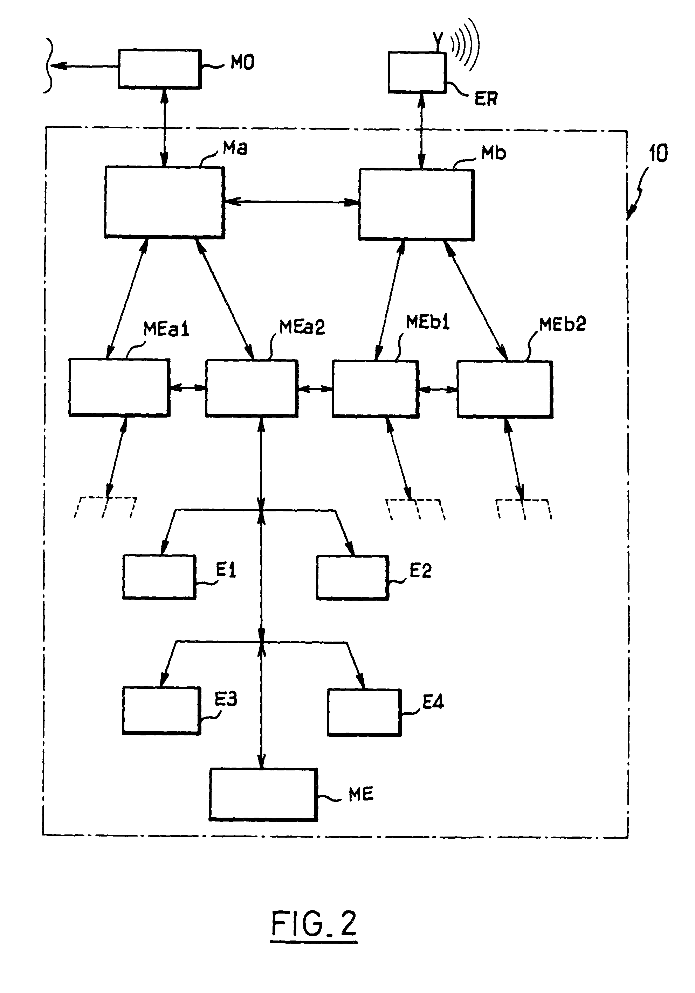

La structure hiérarchisée 10 du système de communication selon l'invention est représentée de façon simplifiée sur la figure 2 sur laquelle sont représentées les possibilités de communication entre les différentes stations et les échanges d'informations entre ces stations, et non pas les liaisons matérielles qui ne sont en aucun cas directes entre station, puisque le secteur S constitue l'unique support matériel d'informations échangées entre stations.

A titre d'exemple, la structure représentée comprend deux stations Maître Ma, Mb au sein d'une habitation, l'une des stations étant reliée à un réseau de communication extérieur via une unité de modulation/démodulation MO et l'autre étant en communication avec des systèmes extérieurs de communication (non représentés) via une unité d'émission/réception ER, par exemple de type HF (haute fréquence).

Les deux stations Maître Ma, Mb constituent la première couche du système, la seconde couche étant constituée par des stations Maître-Esclave MEa1, MEa2 et MEb1, MEB2 qui peuvent communiquer entre elles, avec la station Maître Ma, Mb dont chacune dépend et avec un ensemble de stations Esclave E1, E2, E3, E4 dépendant de chaque station Maître-Esclave et qui constituent la troisième couche du système.

A chaque station Maître Ma, Mb, est associé un ensemble de stations Maître-Esclave MEa1, MEa2 ; MEb1, MEb2, chaque station Maître-Esclave pouvant commander un ensemble de stations Esclave qui peut être également commandé par une autre station Maître-Esclave ME.

Il faut noter le caractère bidirectionnel des communications d'une part entre les stations Maître et d'autre part, entre les stations Maître et les stations Maître-Esclave, et la nature intrinsèquement monodirectionnelle des communications entre les stations Maître-Esclave et les stations Esclave (dans le sens émission d'ordre uniquement).

Par ailleurs, les techniques de modulation classiques par courants porteurs peuvent être utilisées sans problème, notamment les modulations de type FSK ou ASK.

De manière concrète, chaque station est matérialisée par un circuit de structure et de complexité dépendant de la nature de la station, qui est logé, soit directement au sein d'équipements à commander, soit au sein de modules de programmation spécifiques ou encore d'un poste de contrôle du système de communication domotique selon l'invention.

Ainsi, en référence à la figure 3, le système de communication 2 comprend un poste de contrôle PC intégrant une station Maître M et reliable d'une part au secteur S, par exemple le secteur monophasé, via une fiche standard FS et d'autre part au réseau téléphonique via une fiche téléphonique FT, les fiches électrique FS et téléphonique FT étant destinées à être enfichées dans des prises respectivement électrique PS et téléphonique PT reliées respectivement au réseau électrique secteur S et à un réseau téléphonique (non représenté).

Sont également représentées en figure 3, une famille F d'équipements dédiés à la climatisation de l'habitation, une famille F′ d'équipements d'alarme et de sécurité et une famille F˝ d'équipements électroménagers comprenant par exemple un four à micro-ondes 11, une cafetière 10 et un lave-linge 12.

Chaque famille d'équipements F, F′, F˝ comprend une station Maître-Esclave ME, ME′, ME˝ qui peut être incluse au sein d'un poste de contrôle et de programmation M, M′.

Chaque élément de climatisation R₁, R₂, R₃ est relié au secteur S et inclut une station esclave E₁, E₂, E₃ agencées de la façon décrite en figure 1. A titre d'exemple, des convecteurs muraux R₁, R₂ et un équipement de chauffage mobile R₃ sont représentés.

La famille F′ d'équipements d'alarme comporte un poste de contrôle et de programmation M' incluant la station Maître-Esclave ME′, un ensemble de gâches ou verrous électriques 6 incluant des stations Esclave E₆, un dispositif de détection de type radar 5 incluant une station Esclave E₅, des dispositifs d'éclairage tels qu'une lampe de chevet 4 comprenant dans sa prise un circuit constituant une station Esclave E₄ et un éclairage extérieur 3 intégrant également une station Esclave E₃.

Il est à noter que chaque famille d'équipements définissant des stations de type Esclave, Maître-Esclave, ou Esclave peut présenter une vitesse de transmission qui lui est propre, grâce à la présence des filtres résonants et réjecteurs. A titre d'exemple, les vitesses de transmission peuvent être choisies entre 2400 Baud et 300 Baud. Pour cela, le protocole définit pour chaque situation de communication entre des stations de types semblables ou distincts, des paramètres de transmission, notamment une vitesse de transmission numérique, déterminés en fonction desdites stations.

L'organisation de l'ensemble des équipements automatisés d'une habitation en familles ou groupes d'équipements dédiés à une fonction spécifique permet une meilleure gestion du système domotique équipant cette habitation. La communication d'informations et de commandes sur le support matériel préexistant constitué par le réseau secteur, combinée avec l'organisation hiérarchisée qui vient d'être décrite conduit à un système de communication domotique puissant et aisément extensible.

De plus, la mise en oeuvre d'un tel système offre la possibilité à des constructeurs d'équipements destinés à faire partie d'une installation domotique, de développer des gammes cohérentes de produits directement interfaçables sur le secteur.

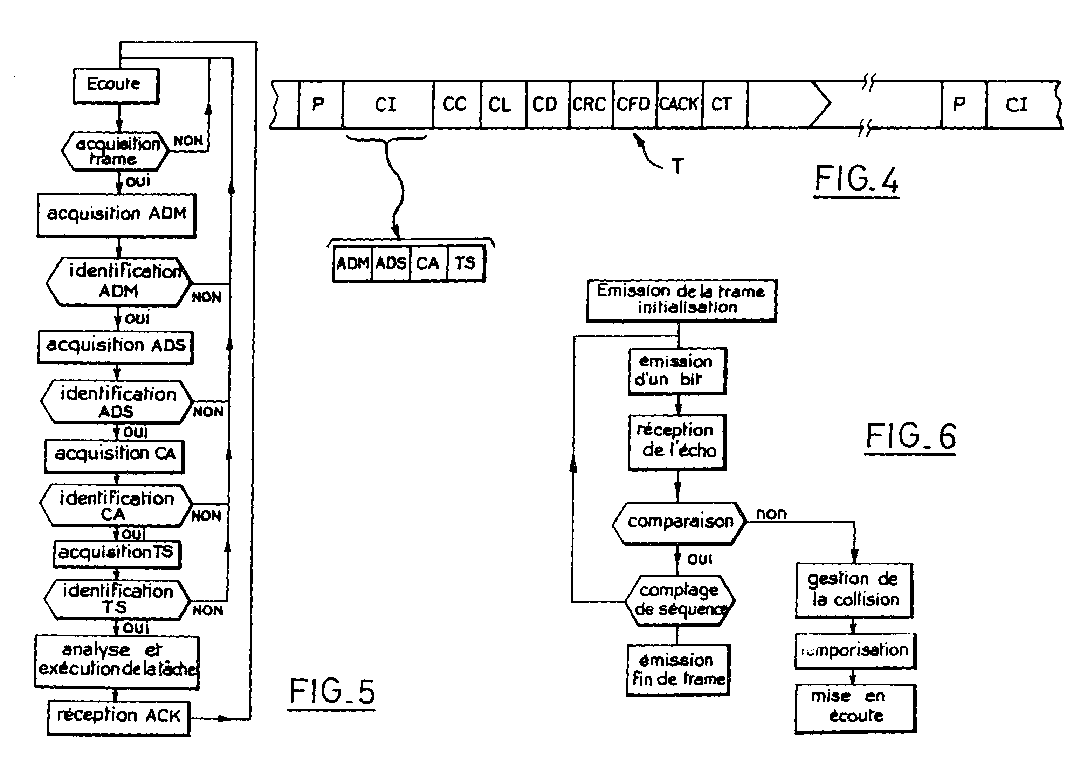

Chaque trame transmise comprend, en référence à la figure 4, un préambule P, et la succession des champs énoncés ci-dessous :
- champ d'identification CI
- champ de contrôle CC
- champ de délimitation de données CL
- champ de données CD
- champ de codage CRC
- champ de fin de données CFD
- champ de reconnaissance CACK
- champ de fin de trame CT.

Le champ d'identification CI comprend lui-même :
- une adresse de la maison ADM
- une adresse de la station dans la maison ADS
- un code d'accès CA
- un code représentatif du type de station TS.

Au sein d'un système domotique mettant en oeuvre le procédé selon l'invention tel que celui décrit aux figures 1 et 3, chaque station Maître-Esclave ou Esclave se trouve en permanence en situation d'écoute sur le secteur, comme l'illustre l'organigramme de la figure 5.

Dès lors que l'existence d'une trame en superposition est détectée sur le secteur, une acquisition du champ d'adresse ADM est effectuée. Si cette adresse est précisément l'adresse de la maison dans laquelle est située la station en écoute, une acquisition du champ d'adresse de station ADS est entreprise avec pour objectif la détection d'une commande destinée à la station en écoute. Si c'est le cas, une acquisition du code d'accès CA est effectuée et permet de sécuriser la transmission d'un ordre à destination d'un équipement. L'acquisition suivante du type de station est une procédure supplémentaire d'identification.

A l'issue du traitement du champ d'identification, l'analyse du champ de commande CC et du champ de données CD conduit à l'exécution de la tache commandée. Après réception du champ de reconnaissance CACK, la transmission de la trame est terminée.

Dans le procédé selon l'invention, les stations du système qui sont conçues pour émettre des trames et plus généralement des informations sur le secteur, à savoir les stations Maître et les stations Maître-Esclave, assurent l'émission de ces informations suivant une procédure intégrant une détection de collision, en référence à la figure 6.

Après une étape préliminaire d'initialisation, chaque bit de la trame est émis sur le secteur et son écho est reçu puis comparé au bit émis jusqu'à ce que l'ensemble de la trame soit émis. Lorsque le nombre de séquences correspondant au nombre total de bits de la trame est compté, une étape d'émission de fin de trame est entreprise. Si la comparaison révèle une différence entre le bit émis et le bit reçu en écho, alors une étape de gestion de la collision ainsi détectée est entreprise. Elle conduit à une mise en écoute pendant une durée de temporisation prédéterminée qui permet de détecter l'état d'encombrement du secteur. Lorsque la ligne est de nouveau libre, une nouvelle émission de la trame est entreprise.

La gestion de collision mise en oeuvre dans le procédé de communication selon l'invention fait l'objet d'une demande de brevet déposée conjointement et simultanément avec la présente demande.

A titre d'exemple d'application domotique du procédé selon l'invention, on peut citer un programme journalier incluant les séquences suivantes :
a) verrouillage des portes
b) surveillance d'un système d'alarme
c) réduction de la puissance de chauffage
d) lecture de la consommation de fioul
e) réception d'un appel téléphonique
f) mise en route d'équipement.

Les séquences a, b, c et d précitées sont gérées par des stations Maître-Esclave spécifiques. La réception et le traitement d'appels téléphoniques est effectuée par la station Maître qui est reliée à un modem.

Chaque verrou électrique constitue une station Esclave. Il en est de même pour chaque capteur du système d'alarme, pour les différents éléments du système de chauffage et pour tout ou partie des équipements domestiques à commander.

Des commandes peuvent bien sûr être transmises à des stations Maître-Esclave par voies infrarouge ou hyperfréquence.

Bien entendu, l'invention n'est pas limitée aux exemples décrits et de nombreux aménagements peuvent être apportés à ces exemples sans sortir du cadre de l'invention.

Ainsi, on peut envisager d'autres types de modulation que les modulations par courants porteurs actuelles de type FSK ou ASK, par exemple des modulations de type DPSK.

On peut aussi envisager l'application du procédé selon l'invention à la gestion d'informations destinées à la clientèle d'une zone commerciale, notamment pour l'actualisation d'informations dans les rayons des surfaces de vente.

## Revendications

1. Procédé pour communiquer des informations et des commandes au sein d'une habitation ou d'un immeuble entre plusieurs équipements électriques (M, ME1, ME2, E1, E2) reliés à un circuit de distribution électrique (S) secteur équipant cette habitation, par injection sur ledit circuit de distribution (S) de courants porteurs véhiculant lesdites informations et commandes, caractérisé en ce qu'il comprend un protocole hiérarchisé de communication entre d'une part, des équipements définissant des stations de communication de type Maître (M) dédiées à l'émission d'information, et d'autre part, des équipements définissant des stations de communication de type Maître-esclave (ME1, ME2) dédiées à la réception d'informations issues des stations de type Maître et à l'émission d'informations à destination d'ensembles d'équipements définissant des stations de type Esclave (E1, E2) dédiées à la réception de commandes ou d'ordres issus d'une ou plusieurs desdites stations de type Maître-Esclave (ME1, ME2), le protocole hiérarchisé de communication définissant pour chaque situation de communication entre des stations de types semblables ou distincts, des paramètres de transmission, notamment une vitesse de transmission numérique, déterminés en fonction desdites stations.

2. Procédé selon la revendication 1, caractérisé en ce que le protocole hiérarchisé de communication autorise des échanges d'informations entre d'une part, l'une au moins desdites stations de type Maître (M) et d'autre part des équipements extérieurs à ladite habitation via un support de communication (R), ces échanges pouvant être effectués selon un protocole de communication externe distinct du protocole de communication hiérarchisé.

3. Procédé selon la revendication 2, caractérisé en ce que les informations sont transmises dans le cadre dudit protocole de communication hiérarchisé, sous la forme d'une trame (T) comprenant un ensemble de champs constitués chacun d'une séquence codée comportant un nombre prédéterminé de bits (éléments binaires), l'un desdits champs étant un champ d'identification (CI) incluant les informations suivantes :
- adresse de l'habitation (ADM),
- adresse de la station (ADS) visée au sein de l'habitation, et
- type de la station (IS).

4. Procédé selon la revendication 3, caractérisé en ce que le champ d'identification inclut en outre une information de code d'accès (CA).

5. Procédé selon la revendication 4, caractérisé en ce que chaque station est placée en permanence dans une séquence d'écoute d'informations circulant sur le circuit de distribution électrique, comprenant les étapes d'identification suivantes :
- test d'acquisition de trame par détection d'un préambule,
- en cas de détection d'un préambule, acquisition de l'adresse (ADM) de l'habitation visée par la communication, au sein du champ d'identification,
- en cas d'identification d'une communication effectivement adressée à la maison dont fait partie la station en écoute, acquisition de l'adresse (ADS) de la station visée par la communication,
- en cas d'identification de cette station, acquisition du code d'accès (CA) à la station, et identification du type de station (TS),
ces étapes d'identification étant suivies d'une étape d'exécution de la tâche à effectuer par la station après analyse d'un champ de contrôle (CC) et d'un champ de données (CD) inclus dans la trame.

6. Procédé selon l'une des revendications 3 à 5 caractérisé en ce que les stations des type Maître et de type Maître-Esclave émettent des informations selon une séquence d'émission bit à bit comprenant les étapes suivantes :
- émission d'un bit, après codage, modulation et injection sur le circuit de distribution,
- réception de l'écho et traitement de celui-ci, pour en déduire un bit reçu,
- comparaison du bit émis et du bit reçu, suivie en cas d'identité d'une séquence d'émission du bit suivant jusqu'à émission de l'ensemble de la trame,
- en cas de divergence entre le bit émis et le bit reçu, détection d'une collision entre deux informations, suivie d'une mise en écoute pendant une durée prédéterminée de temporisation en vue de détecter une absence d'informations véhiculées sur le circuit de distribution.

7. Système (1) pour communiquer des informations et des commandes au sein d'une habitation ou d'un immeuble entre plusieurs équipements reliés à un circuit de distribution électrique secteur équipant cette habitation, par injection sur ledit circuit de distribution de courants porteurs (S) véhiculant lesdites informations et commandes, mettant en oeuvre le procédé selon les revendications précédentes, caractérisé en ce qu'il comprend :
- au sein d'un premier groupe d'équipements, des stations de communication de type Maître agencées pour générer et émettre sur le circuit de distribution électrique des informations et commandes,
- au sein d'un second groupe d'équipements, des stations de communication de type maître-Esclave agencées pour recevoir et exécuter des commandes en provenance des stations de type Maître et pour générer et émettre sur le circuit de distribution électrique des commandes à destination :
- d'un troisième groupe d'équipements incluant des stations de communication de type Esclave dédiées à la réception et à l'exécution de commandes en provenance de stations de type Maître-Esclave, et à l'émission d'informations sur leur état, et en ce qu'à chaque famille définie d'équipements est associé un ensemble de paramètres de transmission spécifiques, notamment une vitesse de transmission.

8. Système selon la revendication 7, caractérisé en ce que chaque station de type Maître comprend des moyens de contrôle et de traitement (MP) et des moyens pour contrôler le protocole de communication (CP) reliés au circuit de distribution secteur (S) via respectivement des moyens de commande de puissance (DP) et des moyens de commande de ligne (DL), les moyens de contrôle et de traitement étant agencés pour échanger des informations et des commandes avec des organes de commande et les moyens de contrôle de protocole étant reliés à des moyens de communication extérieurs via des moyens d'interface, notamment un modem.

9. Système selon les revendications 7 ou 8, caractérisé en ce que chaque station de type Maître-Esclave (ME1, ME2) comprend des moyens de contrôle et de traitement, notamment un microcontrôleur et des moyens de contrôle de protocole (CP) reliés au circuit de distribution secteur (S) via respectivement des moyens de commande de puissance (DP) et des moyens de commande de lignes (DL), les moyens de commande de puissance (DP) étant agencés pour commander l'alimentation électrique d'un ou plusieurs équipements directement contrôlés par ladite station Maître-esclave.

10. Système selon l'une des revendications 7 à 9, caractérisé en ce que chaque station de type Esclave (E1, E2) comprend des moyens de contrôle de protocole (CL), reliés au circuit de distribution secteur (S) via des moyens de commande de ligne (DL1, DL2), et des moyens de commutation de puissance (TP) commandés par les moyens de contrôle de protocole (CL) pour contrôler l'alimentation électrique d'organes et d'équipements associés à ladite station de type Esclave.

11. Système selon l'une des revendications 8 à 10, caractérisé en ce que dans tout ou partie des stations de type Maître-Esclave, les moyens de contrôle et de traitement et les moyens de contrôle de protocole sont regroupés au sein d'un circuit intégré unique.

12. Système selon l'une des revendications 8 à 11, caractérisé en ce que dans tout ou partie des stations, l'ensemble des moyens de contrôle et des moyens de commande est regroupé au sein d'un circuit intégré de signal et de puissance unique.

13. Système selon l'une des revendications 8 à 12, caractérisé en ce qu'il comprend plusieurs filtres réjecteurs et résonants (FR) situés en des points prédéterminés du circuit de distribution électrique (S) pour isoler plusieurs groupes d'équipements (F, F') au sein dudit système.

14. Application du système de communication selon les revendications précédentes à une installation domotique, comprenant plusieurs familles spécifiques d'équipements à commander, caractérisé en ce qu'à chaque famille d'équipements, est associée une station de type Maître-Esclave contrôlant un ensemble de stations de type Esclave associées chacune à un équipement, et en ce qu'à chaque famille d'équipements est associé un ensemble de paramètres de transmission spécifiques, notamment une vitesse de transmission.

## Patentansprüche

1. Verfahren zum Übertragen von Nachrichten und Befehlen in einer Wohnung oder einem Gebäude zwischen mehreren elektrischen Geräten (M, ME1, ME2, E1, E2), die mit einem Stromversorgungsnetz (S) verbunden sind, mit dem diese Wohnung ausgestattet ist, durch Einspeisen von die Nachrichten und Befehle befördernden Trägerströmen in das Stromversorgungsnetz (S), gekennzeichnet durch ein hierarchisiertes Übertragungsprotokoll zwischen einerseits Geräten, die Master-Kommunikationsstationen (M) bilden, die für das Senden von Nachrichten ausgerüstet sind, und andererseits Geräten, die Master-Slave-Kommunikationsstationen (ME1, ME2) bilden, die für den Empfang von von Master-Stationen ausgegebenen Nachrichten und für das Senden von Nachrichten zu Gerätegruppen ausgerüstet sind, die Slave-Stationen (E1, E2) bilden, die für den Empfang von Befehlen oder Anweisungen ausgerüstet sind, die von einer oder mehreren der Master-Slave-Stationen (ME1, ME2) ausgegeben werden, wobei das hierarchisierte Übertragungsprotokoll für jede Übertragungssituation zwischen Stationen ähnlicher oder verschiedener Art Übertragungsparameter, insbesondere eine Geschwindigkeit der digitalen Übertragung, definiert, die in Abhängigkeit von den Stationen bestimmt werden.

2. Verfahren nach Anspruch 1, dadurch gekennzeichnet, daß das hierarchisierte Übertragungsprotokoll den Nachrichtenaustausch zwischen einerseits mindestens einer der Master-Stationen (M) und andererseits außerhalb der Wohnung liegenden Geräten über ein Übertragungsglied (R) gestattet, wobei dieser Austausch gemäß einem externen Übertragungsprotokoll ausgeführt werden kann, das vom hierarchisierten Übertragungsprotokoll verschieden ist.

3. Verfahren nach Anspruch 2, dadurch gekennzeichnet, daß die Nachrichten im Rahmen des hierarchisierten Übertragungsprotokolls in Form eines Rahmens (T) aus einer Gruppe von Feldern übertragen werden, wovon jedes aus einer codierten Folge mit einer festgelegten Anzahl von Bits (binäre Elemente) gebildet ist, wobei eines dieser Felder ein die folgenden Informationen umfassendes Identifikationsfeld (CI) ist:
- Adresse der Wohnung (ADM)
- Adresse der angesprochenen Station (ADS) in der Wohnung und
- Art der Station (TS).

4. Verfahren nach Anspruch 3, dadurch gekennzeichnet, daß das Identifikationsfeld außerdem eine Zugangscode-Information (CA) umfaßt.

5. Verfahren nach Anspruch 4, dadurch gekennzeichnet, daß jede Station ständig in einen Zustand versetzt wird, in dem sie eine Folge von im Stromversorgungsnetz zirkulierenden Nachrichten mithört, wobei das Verfahren die folgenden Identifikationsschritte aufweist:
- Test der Rahmenerfassung durch Detektion einer Präambel,
- im Fall der Detektion einer Präambel Erfassung der Adresse (ADM) der durch die Übertragung angesprochenen Wohnung im Identifikationsfeld,
- im Fall der Identifizierung einer tatsächlich an das Haus adressierten Übertragung, zu dem die mithörende Station gehört, Erfassung der Adresse (ADS) der durch die Übertragung angesprochenen Station,
- im Fall der Identifizierung dieser Station Erfassung des Zugangscodes (CA) zu dieser Station und Identifizierung der Art der Station (TS),
- wobei diesen Identifikationsschritten ein Schritt folgt, bei dem nach Ablesen eines im Rahmen enthaltenen Kontrollfelds (CC) und eines Datenfelds (CD) die von der Station auszuführende Aufgabe ausgeführt wird.

6. Verfahren nach einem der Ansprüche 3 bis 5, dadurch gekennzeichnet, daß die Master- und Master-Slave-Stationen Nachrichten in einer Bit-für-Bit-Sendefolge senden, die folgende Schritte umfaßt:
- Senden eines Bits nach Codierung, Modulation und Einspeisung in das Stromversorgungsnetz,
- Empfangen des Echos und dessen Verarbeitung, um daraus ein empfangenes Bit abzuleiten,
- Vergleichen des gesendeten Bits mit dem empfangenen Bit, im Fall der Identität gefolgt von einer Sendefolge des folgenden Bits, bis der gesamte Rahmen gesendet ist,
- im Fall eines Unterschieds zwischen dem gesendeten Bit und dem empfangenen Bit Detektion einer Kollision zwischen zwei Nachrichten, gefolgt von einem Mithörzustand während einer vorgegebenen Dauer, um das Fehlen von im Stromversorgungsnetz zirkulierenden Nachrichten festzustellen.

7. System (1) zum Übertragen von Nachrichten und Befehlen in einer Wohnung oder einem Gebäude zwischen mehreren Geräten, die mit einem Stromversorgungsnetz verbunden sind, mit dem diese Wohnung ausgestattet ist, durch Einspeisen von diese Nachrichten und Befehle befördernden Trägerströmen (S) in das Stromversorgungsnetz, wobei das System das Verfahren nach den vorhergehenden Ansprüchen durchführt, dadurch gekennzeichnet, daß sie enthält:
- Master-Kommunikationsstationen, die sich in einer ersten Gruppe von Geräten befinden und so beschaffen sind, daß sie Nachrichten und Befehle erzeugen und in das Stromversorgungsnetz senden,
- Master-Slave-Kommunikationsstationen, die sich in einer zweiten Gruppe von Geräten befinden und so beschaffen sind, daß sie Befehle von den Master-Stationen empfangen und ausführen sowie Befehle erzeugen und in das Stromversorgungsnetz zu
- einer dritten Gruppe von Geräten senden, die Slave-Kommunikationsstationen aufweist, die für den Empfang und die Ausführung der Befehle der Master-Slave-Stationen und für das Senden von Informationen über ihren Zustand ausgerüstet sind, und daß jeder definierten Familie von Geräten eine Gruppe von spezifischen Übertragungsparametern, insbesondere eine Übertragungsgeschwindigkeit, zugeordnet ist.

8. System nach Anspruch 7, dadurch gekennzeichnet, daß jede Master-Station eine Einrichtung (MP) zur Kontrolle und zur Verarbeitung sowie eine Einrichtung (CP) zum Überprüfen des Übertragungsprotokolls aufweist, die mit dem Stromversorgungsnetz (S) über eine Einrichtung (DP) zur Leistungssteuerung bzw. eine Einrichtung (DL) zur Leitungssteuerung verbunden sind, wobei die Einrichtung zur Kontrolle und zur Verarbeitung so beschaffen ist, daß sie Nachrichten und Befehle mit Steuereinrichtungen austauscht, wobei die Einrichtung zur Überprüfung des Protokolls über Schnittstellenmittel, insbesondere ein Modem, mit externen Kommunikationseinrichtungen verbunden ist.

9. System nach Anspruch 7 oder 8, dadurch gekennzeichnet, daß jede Master-Slave-Station (ME1, ME2) eine Einrichtung zur Kontrolle und zur Verarbeitung, insbesondere einen Mikrosteuerbaustein, und eine Einrichtung (CP) zum Überprüfen des Protokolls aufweist, die über eine Einrichtung (DP) zur Leistungssteuerung bzw. eine Einrichtung (DL) zur Leitungssteuerung mit dem Stromversorgungsnetz verbunden sind, wobei die Einrichtung (DP) zur Leistungssteuerung so beschaffen ist, daß sie die elektrische Versorgung eines oder mehrerer, direkt von der Master-Slave-Station gesteuerter Geräte steuert.

10. System nach einem der Ansprüche 7 bis 9, dadurch gekennzeichnet, daß jede Slave-Station (E1, E2) eine Einrichtung (CL) zur Überprüfung des Protokolls aufweist, die mit dem Stromversorgungsnetz (S) über eine Einrichtung (DL1, DL2) zur Leitungssteuerung und eine Einrichtung (TP) zur Leistungsumschaltung verbunden ist, die von der Einrichtung (CL) zur Überprüfung des Protokolls gesteuert wird, um die elektrische Versorgung der Einrichtungen und Geräte zu steuern, die der Slave-Station zugeordnet sind.

11. System nach einem der Ansprüche 8 bis 10, dadurch gekennzeichnet, daß bei allen oder einem Teil der Master-Slave-Stationen die Einrichtung zur Kontrolle und zur Verarbeitung und die Einrichtung zur Überprüfung des Protokolls in einem einzigen integrierten Schaltkreis angeordnet sind.

12. System nach einem der Ansprüche 8 bis 11, dadurch gekennzeichnet, daß bei allen oder einem Teil der Stationen die Baugruppe der Einrichtung zur Kontrolle und der Einrichtung zur Steuerung in einem einzigen Signal- und Leistungs-IC angeordnet ist.

13. System nach einem dar Ansprüche 8 bis 12, gekennzeichnet durch mehrere Sperr- und Resonanzfilter (PR), die an festgelegten Punkten des Stromversorgungsnetzes (S) angeordnet sind, um mehrere Gruppen von Geräten (F, F') im System voneinander zu trennen.

14. Anwendung des Übertragungssystems nach den vorhergehenden Ansprüchen auf eine Hausanlage mit verschiedenen spezifischen Familien von zu steuernden Geräten, dadurch gekennzeichnet, daß jeder Familie von Geräten eine Master-Slave-Station zugeordnet ist, die eine Gruppe von jeweils einem Gerät zugeordneten Slave-Stationen steuert, und daß jeder Familie von Geräten eine Gruppe von spezifischen Übertragungsparametern, insbesondere eine Übertragungsgeschwindigkeit, zugeordnet ist.

## Claims

1. Method for communicating data and commands within a dwelling or a building between a number of items of electrical equipment (M, ME1, ME2, E1, E2) connected to a mains electrical distribution circuit (S) equipping this dwelling, by injection onto the said distribution circuit (S) of carrier currents conveying the said data and commands, characterised in that it comprises a hierarchical protocol for communication between, on the one hand, items of equipment defining Master type communication stations (M) dedicated to the sending of data, and on the other hand items of equipment defining Master/Slave type communication stations (ME1, ME2) dedicated to the reception of data originating from Master type stations and to the sending of data to sets of equipment defining Slave type stations (E1, E2) dedicated to the reception of commands or instructions originating from one or more of the said Master/Slave type stations (ME1, ME2), the hierarchical communication protocol defining, for each situation of communication between stations of similar or distinct type, transmission parameters, in particular a digital transmission speed, determined according to the said stations.

2. Method according to Claim 1, characterised in that the hierarchical communication protocol allows exchanges of data between, on the one hand, at least one of the said Master type stations (M) and on the other hand equipment external to the said dwelling by way of a communication medium (R), these exchanges being capable of being carried out according to an external communication protocol distinct from the hierarchical communication protocol.

3. Method according to Claim 2, characterised in that the data are transmitted within the context of the said hierarchical communication protocol, in the form of a frame (T) comprising a set of fields each composed of a coded sequence having a predetermined number of bits (binary elements), one of the said fields being an identification field (CI) including the following data:
- address of the dwelling (ADM),
- address of the station (ADS) targeted within the dwelling, and
- station type (IS).

4. Method according to Claim 3, characterised in that the identification field also includes access code (CA) data.

5. Method according to Claim 4, characterised in that each station is placed permanently in a sequence of listening for data circulating on the electrical distribution circuit, comprising the following identification steps :
- test for frame acquisition by detection of a preamble,
- in the event of detection of a preamble, acquisition of the address (ADM) of the dwelling targeted by the communication, within the identification field,
- in the event of identification of a communication effectively addressed to the house to which the listening station belongs, acquisition of the address (ADS) of the station targeted by the communication,
- in the event of identification of this station, acquisition of the access code (CA) for the station, and identification of the station type (TS),
these identification stages being followed by a step of execution of the task to be carried out by the station after analysis of a control field (CC) and a data field (CD) included in the frame.

6. Method according to one of Claims 3 to 5, characterised in that the Master and Master/Slave type stations send data according to a bit by bit sending sequence comprising the following steps :
- sending of a bit, after coding, modulation and injection onto the distribution circuit,
- reception of the echo and processing of this, in order to derive a received bit from it,
- comparison of the sent bit and the received bit, followed in the event of identity by a sequence of sending the next bit until the whole frame has been sent,
- in the event of a difference between the sent bit and the received bit, detection of a collision between two data items, followed by setting into a listening state for a predetermined delay period with a view to detecting an absence of data conveyed on the distribution circuit.

7. System (1) for communicating data and commands within a dwelling or a building between a number of items of equipment connected to a mains electrical distribution circuit equipping this dwelling, by injection onto the said distribution circuit of carrier currents (S) conveying the said data and commands, implementing the method according to the preceding claims, characterised in that it comprises:
- within a first equipment group, Master type communication stations arranged to generate and send data and commands on the electrical distribution circuit,
- within a second equipment group, Master/Slave type communication stations arranged to receive and execute commands from Master type stations and to generate and send commands on the electrical distribution circuit to :
- a third equipment group including Slave type communication stations dedicated to the reception and execution of commands from Master/Slave type stations, and to the sending of data on their status, and in that a set of specific transmission parameters, notably a transmission speed, is associated with each defined family of equipment.

8. System according to Claim 7, characterised in that each Master type station comprises control and processing means (MP) and means (CP) for controlling the communication protocol connected to the mains distribution circuit (S) by way of respectively power command means (DP) and line command means (DL), the control and processing means being arranged to exchange data and commands with command devices and the protocol control means being connected to external communication means by way of interface means, notably a modem.

9. System according to Claims 7 or 8, characterised in that each Master/Slave type station (ME1, ME2) comprises control and processing means, notably a microcontroller and protocol control means (CP) connected to the mains distribution circuit (S) by way of respectively power command means (DP) and line command means (DL), the power command means (DP) being arranged to command the electrical supply of one or more items of equipment directly controlled by the said Master/Slave station.

10. System according to one of Claims 7 to 9, characterised in that each Slave type station (E1, E2) comprises protocol control means (CL), connected to the mains distribution circuit (S) by way of line command means (DL1, DL2), and power switching means (TP) commanded by the protocol control means (CL) in order to control the electrical supply of devices and equipment associated with the said Slave type station.

11. System according to one of Claims 8 to 10, characterised in that in all or some of the Master/Slave type stations, the control and processing means and the protocol control means are grouped together within a single integrated circuit.

12. System according to one of Claims 8 to 11, characterised in that, in all or some of the stations, all the control means and command means are grouped together within a single integrated signal and power circuit.

13. System according to one of Claims 8 to 12, characterised in that it comprises a number of resonant rejection filters (FR) situated at predetermined points of the electrical distribution circuit (S) in order to isolate a number of groups of equipment (F, F') within the said system.

14. Application of the communication system according to the preceding claims to a home automation installation, comprising a number of specific families of equipment to be commanded, characterised in that with each family of equipment is associated a Master/Slave type station controlling a set of Slave type stations each associated with one item of equipment, and in that a set of specific transmission parameters, notably a transmission speed, is associated with each family of equipment.
